# EUROPÄISCHE PATENTSCHRIFT

(11) **EP 3 294 498 B1**
(45) Veröffentlichungstag und Bekanntmachung des Hinweises auf die Patenterteilung: **27.11.2019**
(21) Anmeldenummer: 16727619.5
(22) Anmeldetag: 04.05.2016
(51) Int. Cl.: B25B 5/06, B25B 5/12, B26D 7/02, B23Q 3/06

(54) **VERFAHREN UND BEARBEITUNGSVORRICHTUNG ZUM SPANNEN UND ZUM BEARBEITEN EINES SCHALTSCHRANKBAUTEILS**
METHOD AND MACHINING DEVICE FOR CLAMPING AND MACHINING AN ELECTRICAL ENCLOSURE COMPONENT
PROCÉDÉ ET DISPOSITIF D'USINAGE DESTINÉS À SERRER ET USINER UN COMPOSANT D'UNE ARMOIRE DE DISTRIBUTION

(30) Priorität: 08.05.2015 DE 102015107249
(43) Veröffentlichungstag der Anmeldung: 21.03.2018
(73) Patentinhaber: Rittal GmbH & Co. KG, 35745 Herborn (DE)
(72) Erfinder: WURM, Kersten, 61118 Bad Vibel (DE)
(74) Vertreter: Angerhausen, Christoph
(86) Internationale Anmeldenummer: PCT/DE2016/100202
(87) Internationale Veröffentlichungsnummer: WO 2016/180401

(56) Entgegenhaltungen:
- EP-A1- 2 842 686
- DE-A1- 2 434 026
- IT-A1- FI20 090 250

## Beschreibung

Die Erfindung betrifft ein Verfahren und eine Bearbeitungsvorrichtung zum Spannen und zum Bearbeiten eins Schaltschrankbauteils.

### Hintergrund

Derartige Technologien werden genutzt, um Werkstücke, die als Schaltschrankbauteil ausgeführt sind, zu bearbeiten. Als Bearbeitungswerkzeug können zum Beispiel Bohr- oder Fräsköpfe zum Einsatz kommen, aber auch das Plasma- oder Laserbearbeiten kann vorgesehen sein.

Das Schaltschrankbauteil wird auf einer Arbeitsfläche einer Bearbeitungsvorrichtung gespannt, so dass es während des anschließenden Bearbeitens in einer Bearbeitungsstellung gesichert ist. Es ist bekannt, von Hand zu betätigende Spanneinrichtungen zu nutzen, um das Schaltschrankbauteil auf der Arbeitsfläche zu sichern.

Aus dem Dokument DE 24 34 026 A1 ist eine Vorrichtung zum senkrechten Spannen von Stapeln aufgeschichteter Werkstücke bekannt. Spannklauen lagern in der Spannstellung auf der Deckfläche des Stapels von Werkstücken.

Im Dokument EP 2 842 686 A1 ist eine Spannvorrichtung offenbart, bei der ein Spannelement auf einer Schenkachse schwenkbar gelagert ist, derart, dass das Spannelement in der Spannstellung auf der Deckfläche des zu spannenden Bauteils zur Anlage kommt.

Eine weitere Spannvorrichtung ist im Dokument IT FI20 090 250 A1 offenbart.

### Zusammenfassung

Aufgabe der Erfindung ist es, ein Verfahren und eine Bearbeitungsvorrichtung zum Spannen und zum Bearbeiten eines Schaltschrankbauteils anzugeben, bei denen die Handhabung eines als Schaltschrankbauteil ausgeführten Werkstücks im Betrieb erleichtert ist.

Zur Lösung sind ein Verfahren sowie eine Bearbeitungsvorrichtung zum Spannen und zum Bearbeiten eines Schaltschrankbauteils nach den unabhängigen Ansprüchen 1 und 12 geschaffen. Ausgestaltungen sind Gegenstand von abhängigen Unteransprüchen.

Nach einem Aspekt ist ein Verfahren zum Spannen und zum Bearbeiten eines Schaltschrankbauteils in einer Bearbeitungsvorrichtung geschaffen. Bei dem Verfahren wird ein als Schaltschrankbauteil ausgeführtes Werkstück auf einer Arbeitsfläche einer Bearbeitungsvorrichtung angeordnet. Das Werkstück wird auf der Arbeitsfläche gespannt, wobei hierbei eine Lagereinrichtung, auf der zumindest eine Spanneinrichtung angeordnet ist, mittels einer mit einem Stellantrieb betriebenen Verlagerungseinrichtung zu einem Rand des Werkstücks hin verlagert wird. Ein Spannelement der zumindest einen Spanneinrichtung wird beim Fahren des Spannelements gegen den Rand des Werkstücks aus einer Losstellung in eine Spannstellung verlagert, in welcher das Spannelement an dem Werkstück in mehreren Kontaktbereichen zur Anlage kommt, so dass das Spannelement das Werkstück gegen Verlagern auf der Arbeitsfläche in quer zueinander stehenden Richtungen in einer Bearbeitungsstellung sichert. Anschließend erfolgt das Bearbeiten des Werkstücks mittels eines Bearbeitungswerkzeugs.

Nach einem weiteren Aspekt ist eine Bearbeitungsvorrichtung zum Spannen und zum Bearbeiten eines Schaltschrankbauteils geschaffen. Die Bearbeitungsvorrichtung weist eine Arbeitsfläche auf, die eingerichtet ist, ein als Schaltschrankbauteil ausgeführtes Werkstück zum Bearbeiten aufzunehmen. Zumindest eine Spanneinrichtung ist vorgesehen, die an einer Lagereinrichtung angeordnet ist und ein Spannelement aufweist. Eine Verlagerungseinrichtung der Bearbeitungsvorrichtung ist eingerichtet, die zumindest eine Spanneinrichtung in Bezug auf das Werkstück in verschiedene Verlagerungsstellungen zu verlagern oder zu bewegen. Im Betrieb wird das Werkstück auf der Arbeitsfläche gespannt und mittels eines Bearbeitungswerkzeugs bearbeitet. Beim Spannen des Werkstücks wird die Lagereinrichtung mit der zumindest einen Spanneinrichtung mittels der Verlagerungseinrichtung zu einem Rand des Werkstücks hin verlagert wird. Das Spannelement der zumindest einen Spanneinrichtung wird beim Fahren gegen den Rand des Werkstücks aus einer Losstellung in eine Spannstellung verlagert wird, in welcher das Spannelement an dem Werkstück in mehreren Kontaktbereichen zur Anlage kommt, so dass das nelement das Werkstück gegen Verlagern auf der Arbeitsfläche in quer zueinander stehenden Richtungen in einer Bearbeitungsstellung sichert. Dann kann das Werkstück mittels eines Bearbeitungswerkzeugs bearbeitet werden.

Das Spannelement der zumindest einen Spanneinrichtung ist um eine Schwenkachse schwenkbar gelagert. Beim Spannen des Werkstücks auf der Arbeitsfläche kommt weiterhin der Rand des Werkstücks zunächst in einem proximalen Abschnitt des Spannelements hieran zur Anlage und das Spannelement schwenkt beim weiteren Fahren des Spannelements gegen den Rand des Werkstücks in die Spannstellung, in welcher, ergänzend zur Anlage des proximalen Abschnitts, ein distaler Abschnitt des Spannelements an dem Werkstück zur Anlage kommt.

An dem Spannelement sind ein proximaler und ein distaler Abschnitt auf gegenüberliegenden Seiten eines Segmentausschnitts gebildet. Der Segmentausschnitt kann einen rechten oder einen spitzen Winkel aufweisen. Bei dem Segmentausschnitt kann es sich um einen Kreissegmentausschnitt handeln.

Das Spannelement kann in der Spannstellung in einem oder mehreren der Kontaktbereiche flächig an dem Werkstück zur Anlage kommen.

Die zumindest eine Spanneinrichtung kann mehrere Spannelemente aufweisen, die beispielsweise quer zur Richtung der Verlagerung zum Rand des Werkstücks hin nebeneinander angeordnet sein können.

Der Stellantrieb für die Verlagerungseinrichtung kann zum Beispiel ein pneumatischer Antrieb und / oder ein elektrischer Antrieb sein. Auch die Nutzung eines Magnetantriebs kann vorgesehen sein.

Das Bearbeiten des Werkstücks, bei dem es sich zum Beispiel um ein Flachbauteil handeln kann, mit Hilfe des Bearbeitungswerkzeugs kann das Fräsen und / oder das Bohren umfassen. Alternativ oder ergänzend kann eine Bearbeitung mit einem Plasma- oder einem Laser-Arbeitskopf vorgesehen sein.

Das erzwungene Verlagern des Spannelements aus der Losstellung in die Spannstellung beim Fahren des Spannelements gegen den Rand des Werkstücks kann ausschließlich aufgrund der Druckbeaufschlagung des Spannelements beim Drücken gegen den Rand des Werkstücks stattfinden, also frei von einer die Verlagerung unterstützenden Antriebskraft einer Aktoreinrichtung.

Die Lagereinrichtung kann auf einem Führungssystem angeordnet sein, welches auf der Arbeitsfläche Führungsschienen aufweist, zum Beispiel in Form von C-Schienen, die multifunktionell ausgeführt sind, insbesondere derart, dass die Führungsschienen im Bereich der Arbeitsfläche ergänzend zum Aufnehmen von Handspanneinrichtungen und / oder Auflageelementen (Abstandselementen) dienen. In den Führungsschienen, welche in die Arbeitsfläche eingelassen sein können, können hierbei Handspanneinrichtungen zum manuellen Spannen des Werkstücks auf der Arbeitsfläche lösbar angeordnet sein. Alternativ oder ergänzend sind in den Führungsschienen Auflageelemente lösbar angeordnet, auf denen das Werkstück aufliegt, wenn es zum Bearbeiten auf der Arbeitsfläche angeordnet wird.

Es kann vorgesehen sein, die mindestens eine Spanneinrichtung in einer Stellung zu sichern (festzustellen), wenn das Spannelement in der Spannstellung angeordnet ist. Zum Beispiel kann eine mechanische Feststellung eines in den Führungsschienen geführten und zuvor zum Rand des Werkstücks hin verlagerten Schlittens vorgesehen sein, beispielweise mittels Klemmen des Schlittens in der Führungsschiene.

Mit der Lagereinrichtung und der hieran angeordneten Spanneinrichtung sowie der zugeordneten Verlagerungseinrichtung ist ein Spannsystem gebildet, mit ein nicht-manuelles maschinelles Spannen des Werkstücks ermöglicht ist, wobei wahlweise ergänzend manuelle Spanneinrichtungen vorgesehen sein können.

Das Spannelement kann an der Spanneinrichtung frei drehend oder schwenkend gelagert sein. Der proximale Abschnitt des Spannelements kann bei der Annäherung der zumindest einen Spanneinrichtung an den Rand des Werkstücks in Richtung des Werkstücks vorstehen. Nach dem Schwenken oder Drehen des Spannelements in die Spannstellung kann der distale Abschnitt des Spannelements in Bezug auf den proximalen Abschnitt in Richtung des Werkstücks vorstehen. Das Spannelement kann bei dieser oder anderen Ausführungen als Vollkörper ausgebildet sein und beispielsweise eine Scheibenform aufweisen. Das Drehen oder schwenken der Spannelemente in die Spannstellung kann durch einen Aktuator unterstützt werden, welche eine Antriebskraft für das Schwenken bereitstellt, die auf das zumindest eine Spannelement eingeleitet wird.

Das Spannelement kann das Werkstück in der Spannstellung gegen die Arbeitsfläche drücken.

Bei dem Werkstück kann es sich um ein flaches Schaltschrankbauteil handeln, zum Beispiel ein Türbauteil, ein Wandbauteil wie ein Seitenwand- oder ein Rückwand oder ein Bodenteil. Aber auch um einen wenigstens teilweise vormontierten Korpus für einen Schaltschrank kann es sich bei dem Werkstück handeln.

Die Lagereinrichtung mit der zumindest einen Spanneinrichtung kann mittels der Verlagerungseinrichtung in vertikaler Richtung verlagert werden. Die Lagereinrichtung kann bei dieser oder anderen Ausführungsformen mittels einer oder mehrerer Schienen gebildet sein, entlang welcher die zumindest eine oder mehrere Spanneinrichtungen angeordnet sind. Das Verlagern der Lagereinrichtung kann parallel zur Oberfläche der Arbeitsfläche erfolgen.

An der Lagereinrichtung können mehrere Spanneinrichtungen angeordnet sein, bei denen beim Spannen des Werkstücks jeweils das Spannelement aus der Losstellung in die Spannstellung verlagert wird. Die mehreren Spanneinrichtungen sowie die jeweiligen Spannelemente können synchron gegen den Rand des Werkstücks gefahren werden. Die erzwungene Verlagerung der Spannelemente aus der Losstellung in die Spannstellung kann dann ebenfalls synchron stattfinden. Alternativ kann jede gegen den Rand des Werkstücks verfahrbare Lagereinrichtung genau eine Spanneinrichtung tragen.

Das Spannelement kann sich selbsttätig in die Losstellung zurückbewegen, wenn die zumindest eine Spanneinrichtung zum Freigeben des Werkstücks von diesem weggefahren wird. Das Spannelement kann gegen das Verlagern in die Spannstellung vorgespannt sein, so dass die am Spannelement bereitgestellte Vorspannung die Rückverlagerung zumindest teilweise bewirkt. Alternativ kann das Verlagern des Spannelements aus der Spannstellung in die Losstellung ausschließlich durch die Schwerkraft bewirkt sein, beispielsweise ein hierdurch verursachtes Drehmoment, also frei von einer ergänzenden Krafteinwirkung, zum Beispiel frei von einer Vorspannung. Bei einer anderen Ausgestaltung kann das Verlagern des Spannelements in die Losstellung von einem Aktor unterstützt werden. Bei der drehbaren oder schwenkbaren Lagerung des Spannelements dreht oder schwenkt sich dieses selbsttätig in die Losstellung zurück, wenn die zumindest eine Spanneinrichtung zum Freigeben des Werkstücks von diesem weggefahren wird.

In der Spannstellung können Kontaktbereiche auf benachbarten Kantenflächen des Werkstücks ausgebildet werden. Ist das Spannelement mit dem proximalen und dem distalen Abschnitt gebildet, so können diese auf den benachbarten Abschnitten im Kantenbereich, zum Beispiel einem Eckbereich des Werkstücks zur Anlage kommen.

Eine Montagestellung der zumindest einen Spanneinrichtung kann an der Lagereinrichtung verstellbar sein. Die zumindest eine Spanneinrichtung kann zu diesem Zweck lösbar an der Lagereinrichtung montiert sein, so dass die zumindest eine Spanneinrichtung im gelösten Zustand wenigstens entlang der Lagereinrichtung verschiebbar ist, um sie dann wieder zu fixieren oder festzustellen. Beispielsweise kann die zumindest eine Spanneinrichtung längs einer Tragschiene verlagerbar angeordnet sein. Entlang der Tragschiene können mehrere Spanneinrichtungen mit einem jeweiligen Spannelement verlagerbar aufgenommen sein, so dass das Spannsystem an unterschiedliche Werkstückformen anpassbar ist.

Das Werkstück kann auf einer aufrecht stehenden Arbeitsfläche angeordnet und gespannt werden. Beispielsweise kann so ein flaches Schaltschrankbauteil aufrechtstehend bearbeitet werden, zum Beispiel ein Tür- oder ein Bodenteil.

Das Verlagern der Lagereinrichtung kann mit der zumindest einen Spanneinrichtung mittels der Verlagerungseinrichtung zwischen Verlagerungsstellung ausgeführt werden, die in Bezug zu einer Standfläche der Bearbeitungsvorrichtung oberhalb einer Benutzergriffhöhe von wenigstens 200 cm angeordnet sind. Alternativ können die Verlagerungsstellungen oberhalb von wenigstens 230 cm angeordnet sein.

Die Verlagerungseinrichtung kann mittels eines pneumatischen, eines elektrischen und / oder eines magnetischen Aktors betätigt werden.

In Verbindung mit der Bearbeitungsvorrichtung zum Spannen und zum Bearbeiten eines Schaltschrankbauteils können die vorangehend im Zusammenhang mit dem Verfahren erläuterten Ausgestaltungen einzeln oder in beliebiger Kombination entsprechend vorgesehen sein.

Ist das Spannelement um eine Schwenkachse schwenkbar gelagert, kann die Drehachse an einer Gabelaufnahme gebildet sein, in welcher das Spannelement angeordnet ist. In gleicher Weise kann eine solche Ausgestaltung im Zusammenhang mit einer Schwenkachse vorgesehen sein.

Die Lagereinrichtung mit der hieran angeordneten zumindest einer Spanneinrichtung sowie die Verlagerungseinrichtung können lösbar auf der Arbeitsfläche montiert sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Bearbeitungsvorrichtung zum Spannen und zum Bearbeiten eines Schaltschrankbauteils mit aufrecht stehender Arbeitsfläche,
- Fig. 2: eine schematische Darstellung der aufrecht stehenden Arbeitsfläche,
- Fig. 3: eine schematische Darstellung einer Spanneinrichtung von der Seite,
- Fig. 4: eine schematische Darstellung von Elementen einer Spanneinrichtung von der Seite, bei der ein Spannelement federnd gelagert ist,
- Fig. 5: eine schematische Darstellung einer Anordnung mit einer Führungsschiene und einem hierin angeordneten Schlitten oder Gleitbock von oben und
- Fig. 6: eine Schnittdarstellung der Anordnung aus Fig. 5.

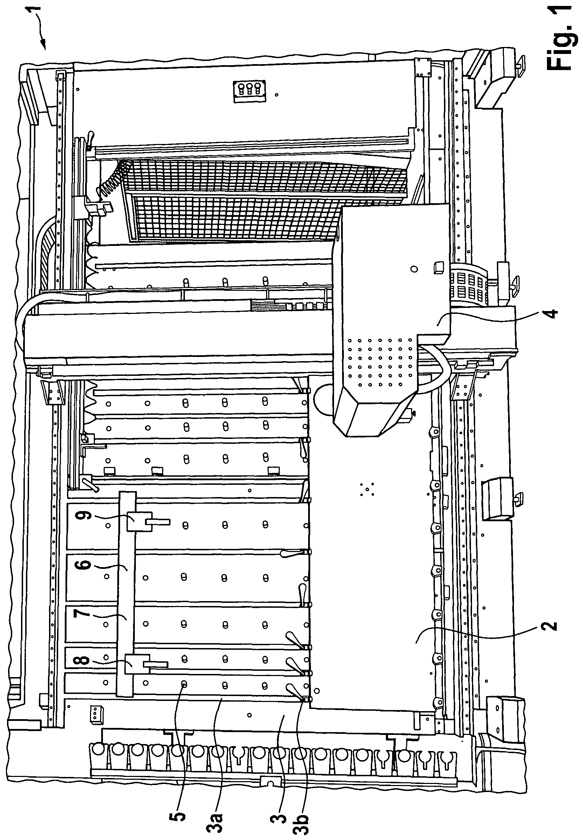

Fig. 1 zeigt eine schematische Darstellung einer Bearbeitungsvorrichtung 1 zum Spannen und zum Bearbeiten eines Schaltschrankbauteils 2. Das Schaltschrankbauteil 2 ist im Bereich einer Arbeitsfläche 3 gespannt, um es mit einem Bearbeitungswerkzeug 4 zu bearbeiten, welches beispielsweise einen Laserschneidkopf aufweist. Die Arbeitsfläche 3 ist in der gezeigten Ausführung aufrecht stehend angeordnet, so dass das Schaltschrankbauteil 2 in einer aufrechten Stellung gespannt und bearbeitet wird. Bei dem Schaltschrankbauteil 2 kann es sich beispielsweise um einen Flachbauteil handeln, wie eine Montageplatte, eine Tür oder eine Seitenwand des herzustellenden Schaltschranks.

Im Bereich der Arbeitsfläche 3 ist das Schaltschrankbauteil 2 auf Lagerelementen 5 angeordnet, die zum Beispiel Stiftelemente und / oder Bürstenleisten umfassen können. Mit Hilfe der Lagerelementen 5 wird das Schaltschrankbauteil 2 beabstandet von der Oberfläche der Arbeitsfläche 3 gehalten.

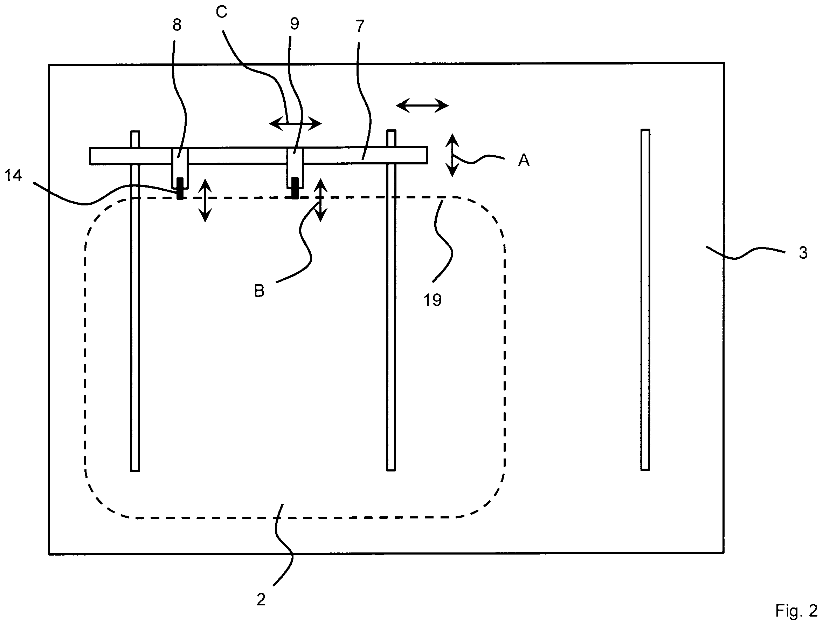

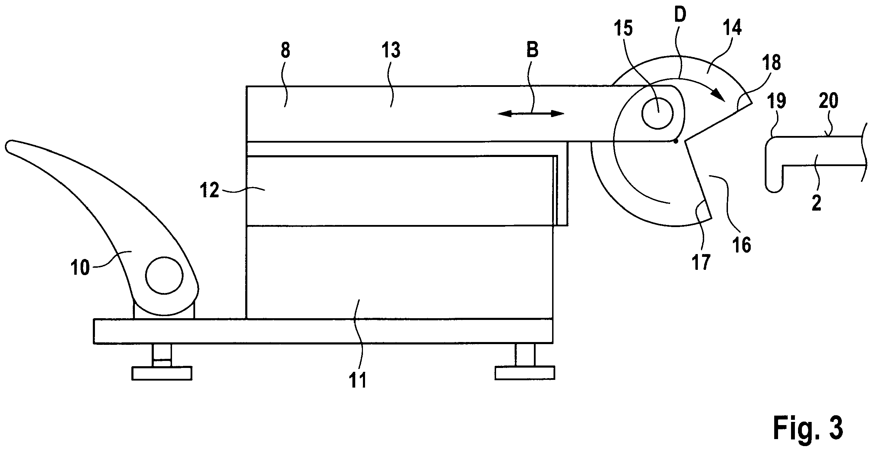

Im oberen Bereich der Arbeitsfläche 3 ist ein Spannsystem 6 angeordnet, was nachfolgend näher erläutert wird. Hierzu zeigen Fig. 2 eine schematische Darstellung der Arbeitsfläche 3 sowie Fig. 3 eine schematische Darstellung des Spannsystems 6 von der Seite.

Auf einer Tragschiene 7 sind Spanneinrichtungen 8, 9 angeordnet (vgl. Fig. 2). Die Spanneinrichtungen 8, 9 sind im Bereich der Arbeitsfläche 3 an der Tragschiene 7 mit Hilfe einer Befestigungseinrichtung 10 lösbar montiert (vgl. Fig. 3). Die Tragschiene 7 ist in vertikaler Richtung relativ zur Arbeitsfläche 3 und zum hierauf angeordneten Schaltschrankbauteil 2 verlagerbar. Hierzu kann beispielweise ein Führung-Schlitten-System genutzt werden, wobei zum Bereitstellen einer Antriebskraft ein pneumatischer, ein elektrischer oder ein magnetischer Antrieb vorgesehen sein kann, welcher die Antriebskraft zum Verlagern der Tragschiene 7 mit den Spanneinrichtungen 8, 9 zum Schaltschrankbauteil 2 hin und von diesem weg bereitstellt. Dies ist in Fig. 2 schematisch mittels eines Pfeils A gezeigt. Alternativ kann auch ein aus- und einfahrbarer Tragarm vorgesehen sein, an welchem die Tragschiene 7 gehalten wird, um die Spanneinrichtungen 8, 9 relativ zum Schaltschrankbauteil 2 zu verlagern.

Gemäß Fig. 3 weist die Spanneinrichtung 8 ein Sockelbauteil 11 und ein hierauf angeordnete Verlagerungseinrichtung 12 auf, die eine Halteeinrichtung 13 trägt, an der ein Spannelement 14 um eine Dreh- oder Schwenkachse 15 drehbar / schwenkbar gelagert ist. Die Verlagerungseinrichtung 12 ist beim gezeigten Ausführungsbeispiel in Fig. 3 in Ergänzung zur Verlagerungseinrichtung vorgesehen, mit welcher die Tragschiene 7 mit den Spanneinrichtungen 8, 9 verlagert wird. In einer alternativen Ausgestaltung ist die Verlagerungseinrichtung 12 weggelassen oder übernimmt allein das Verlagern des Spannelementes 14 zum Spannen und Loslassen.

Das Spannelement 14 verfügt über einen Kreissegmentausschnitt 16, an dem ein proximaler Abschnitt 17 sowie ein distaler Abschnitt 18 gebildet sind. Das Spannelement 14 ist gemäß Fig. 3 einem Rand 19 des Schaltschrankbauteils 2 gegenüberliegend angeordnet. Fig. 3 zeigt das Spannelement 14 in einer Losstellung, also beabstandet und gelöst von dem Rand 19.

Um das Schaltschrankbauteil 2 zu spannen, wird die Tragschiene 7 mit den Spanneinrichtungen 8, 9 und somit das Spannelement 14 gegen den Rand 19 gefahren, so dass der Rand 19 zunächst mit dem proximalen Abschnitt 17 in Kontakt kommt, wodurch eine Dreh- oder Schwenkbewegung des Spannelements 14 um die Achse 15 bewirkt wird (vgl. Pfeil D in Fig. 3), um den distalen Abschnitt 18 mit dem Schaltschrankbauteil 2 in Kontakt zu bringen im Bereich einer Werkstückoberfläche 20.

Soll das Schaltschrankbauteil 2 nach dem Bearbeiten wieder freigegeben werden, wird die Tragschiene 7 mit den Spanneinrichtungen 8, 9 und somit das Spannelement 14 mit Hilfe der die Tragschiene 7 betätigenden Verlagerungseinrichtung von dem Rand 19 zurückgefahren, worauf sich das Spannelement 14 unter Einwirkung der Schwerkraft selbsttätig wieder in die in Fig. 3 gezeigte Losstellung dreht / schwenkt.

Bei der gezeigten Ausführungsform kann bei den Spanneinrichtungen 8, 9 das jeweilige Spannelement 14 mit Hilfe der zugeordneten Verlagerungseinrichtung 12 zum Spannen von oben entlang einer Linearachse (Pfeil B) gegen den Rand 19 des Schaltschrankbauteils 2 gefahren werden, also wahlweise in Ergänzung zur Verlagerung der Tragschiene 7 als solcher.

Die Spanneinrichtungen 8, 9 sind an der Tragschiene 7 verlagerbar montiert, was in Fig. 2 mit Hilfe eines Pfeils C schematisch gezeigt ist.

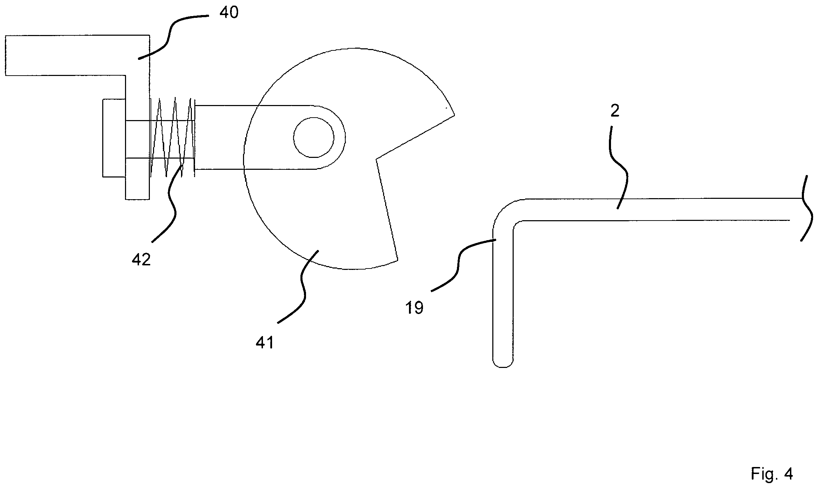

Fig. 4 zeigt eine schematische Darstellung von Elementen einer Spanneinrichtung 40 von der Seite, bei der ein zugeordnetes, drehbar gelagertes Spannelement 41 mit Hilfe einer Federeinrichtung 42 federnd gelagert ist, die im gezeigten Ausführungsbeispiels mit einer Feder gebildet ist. Beim Fahren gegen den Rand 19 kann das Spannelement 41 so gegen die Kraft der Federeinrichtung 42 zurück gedrückt werden, insbesondere gegen die Richtung der Anfahrbewegung.

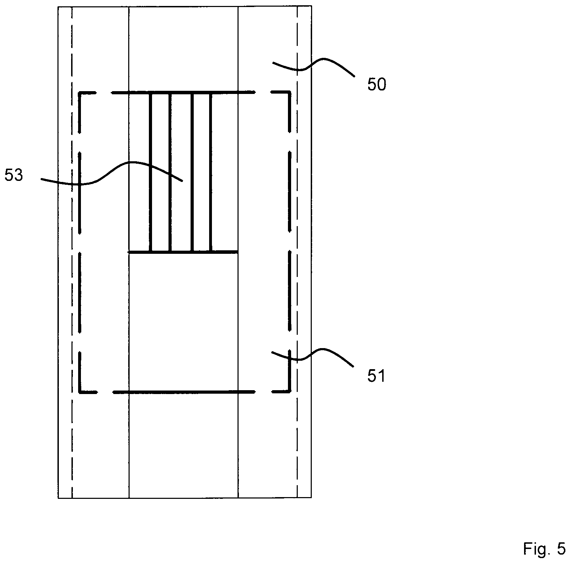

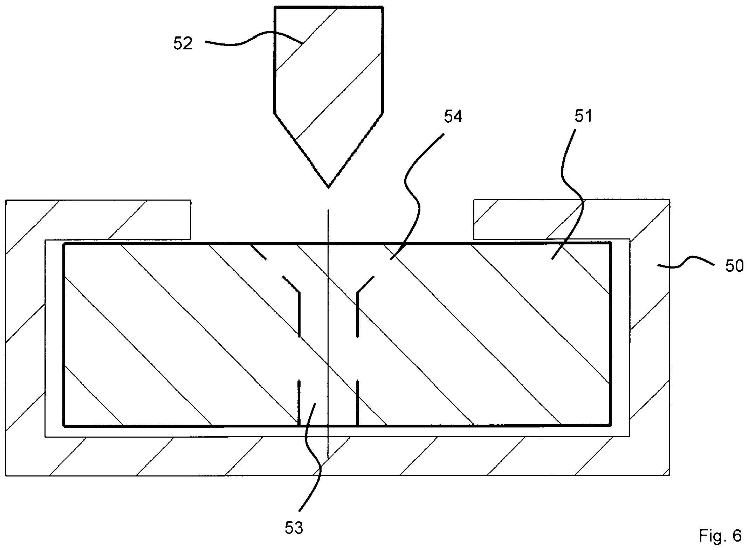

Die Fig. 5 und 6 zeigen schematische Darstellungen einer Anordnung einer Führungsschiene 50, die im gezeigten Ausführungsbeispiel als C-Schiene ausgeführt ist, mit einem hieran angeordneten Schlitten oder Gleitbock 51, der längs der Führungsschiene 50 verlagerbar ist, von oben und im Schnitt. Um den Schlitten 51 in einer Verlagerungsstellung entlang der Führungsschiene 50 zu sichern, insbesondere gegen Verrutschen, wird ein Feststellkeil 52 in eine mit schlitzförmige Ausnehmung 53 gedrückt, die eine Fase 54 aufweist, so dass der Schlitten oder Gleitbock 51 in der Führungsschiene 50 geklemmt wird, indem der Schlitten unter Einwirkung des Feststellkeils 52 gespreizt wird.

Die in den Fig. 5 und 6 dargestellte Ausführung kann genutzt werden, um an dem Schlitten 51 die Tragschiene 7 aufzunehmen. Beispielsweise kann die Anordnung aus den Fig. 5 und 6 die bei der Bearbeitungsvorrichtung in Fig. 1 mit Hilfe von dort auf der Arbeitsfläche 3 angeordneten Führungsschienen 3a umgesetzt werden. Bei der Ausgestaltung in Fig. 1 sind die Führungsschienen 3a multifunktionell ausgeführt. Die Führungsschienen 3a dienen der verlagerbaren Aufnahme von Handspannelementen 3b.

## Patentansprüche

1. Verfahren zum Spannen und zum Bearbeiten eines Schaltschrankbauteils in einer Bearbeitungsvorrichtung (1), wobei das Verfahren die folgenden Schritte aufweist:
- Anordnen eines als Schaltschrankbauteil ausgeführten Werkstücks (2) auf einer Arbeitsfläche (3) einer Bearbeitungsvorrichtung (1),
- Spannen des Werkstücks (2) auf der Arbeitsfläche (3), wobei hierbei
- eine Lagereinrichtung (7), auf der zumindest eine Spanneinrichtung (8, 9) angeordnet ist, zu einem Rand (19) des Werkstücks (2) hin verlagert wird, und
- ein Spannelement (14) der zumindest einen Spanneinrichtung (8, 9) bei einem Fahren gegen den Rand (19) des Werkstücks (2) aus einer Losstellung in eine Spannstellung verlagert wird, und
- Bearbeiten des Werkstücks (2) mittels eines Bearbeitungswerkzeugs (4),
**dadurch gekennzeichnet, dass**
- die Lagereinrichtung (7) mit der zumindest einen Spanneinrichtung (8, 9) mittels einer mit einem Stellantrieb betriebenen Verlagerungseinrichtung (12) zum Rand (19) des Werkstücks (2) hin in die Spannstellung verlagert wird,
- in der Spannstellung das Spannelement (14) an dem Werkstück (2) in mehreren Kontaktbereichen zur Anlage kommt, so dass das Spannelement (14) das Werkstück (2) gegen Verlagern auf der Arbeitsfläche (3) in quer zueinander stehenden Richtungen in einer Bearbeitungsstellung sichert, und
- das Spannelement (14) um eine Schwenkachse (15) schwenkbar gelagert ist und beim Spannen des Werkstücks (2) auf der Arbeitsfläche (3) ein proximaler und ein distaler Abschnitt (17, 18) des Spannelements (14), die auf gegenüberliegenden Seiten eines Segmentausschnitts (16) des Spannelements (14) gebildet sind, am Werkstück (2) zur Anlage kommen, derart, dass
- der Rand (19) des Werkstücks (2) zunächst in dem proximalen Abschnitt (17) des Spannelements (14) hieran zur Anlage kommt und
- das Spannelement (14) beim weiteren Fahren des Spannelements (14) gegen den Rand (19) des Werkstücks (2) in die Spannstellung schwenkt, in welcher, ergänzend zur Anlage des proximalen Abschnitts (17), der distale Abschnitt (18) des Spannelements (14) an dem Werkstück (2) zur Anlage kommt.

2. Verfahren nach Anspruch 1, **dadurch gekennzeichnet, dass** das Spannelement (14) das Werkstück (2) in der Spannstellung gegen die Arbeitsfläche (3) drückt.

3. Verfahren nach einem der vorangehenden Ansprüche, **dadurch gekennzeichnet, dass** die Lagereinrichtung (7) mit der zumindest einen Spanneinrichtung (8, 9) mittels der Verlagerungseinrichtung in vertikaler Richtung verlagert wird.

4. Verfahren nach einem der vorangehenden Ansprüche, **dadurch gekennzeichnet, dass** an der Lagereinrichtung (7) mehrere Spanneinrichtung (8, 9) angeordnet sind, bei denen beim Spannen des Werkstücks (2) jeweils das Spannelement (14) aus der Losstellung in die Spannstellung verlagert wird.

5. Verfahren nach einem der vorangehenden Ansprüche, **dadurch gekennzeichnet, dass** das Spannelement (14) sich selbsttätig in die Losstellung zurückbewegt, wenn die zumindest eine Spanneinrichtung (8, 9) zum Freigeben des Werkstücks (2) von diesem weggefahren wird.

6. Verfahren nach einem der vorangehenden Ansprüche, **dadurch gekennzeichnet, dass** in der Spannstellung Kontaktbereiche auf benachbarten Kantenflächen des Werkstücks (2) ausgebildet werden.

7. Verfahren nach einem der vorangehenden Ansprüche, **dadurch gekennzeichnet, dass** eine Montagestellung der zumindest einen Spanneinrichtung (8, 9) an der Lagereinrichtung (7) verstellbar ist.

8. Verfahren nach einem der vorangehenden Ansprüche, **dadurch gekennzeichnet, dass** das Werkstück (2) auf einer aufrecht stehenden Arbeitsfläche (3) angeordnet und gespannt wird.

9. Verfahren nach einem der vorangehenden Ansprüche, **dadurch gekennzeichnet, dass** das Verlagern der Lagereinrichtung (7) mit der zumindest einen Spanneinrichtung (8, 9) mittels der Verlagerungseinrichtung zwischen Verlagerungsstellung ausgeführt wird, die in Bezug zu einer Standfläche der Bearbeitungsvorrichtung (1) oberhalb einer Benutzergriffhöhe von wenigstens 200 cm angeordnet sind.

10. Verfahren nach einem der vorangehenden Ansprüche, **dadurch gekennzeichnet, dass** die Verlagerungseinrichtung mittels eines pneumatischen Aktors betätigt wird.

11. Bearbeitungsvorrichtung (1) zum Spannen und zum Bearbeiten eines Schaltschrankbauteils, mit
- einer Arbeitsfläche (3), die eingerichtet ist, ein als Schaltschrankbauteil ausgeführtes Werkstück (2) zum Bearbeiten aufzunehmen,
- zumindest einer Lagereinrichtung (7) und einer Spanneinrichtung (8, 9), die an der Lagereinrichtung (7) angeordnet ist, und
- einem Spannelement (14) der Spanneinrichtung (8, 9), welches mit einem proximalen und einem distalen Abschnitt (17, 18) gebildet ist, die auf gegenüberliegenden Seiten eines Segmentausschnitts (16) des Spannelements (14) angeordnet sind, und wobei das Spannelement (14) bei einem Fahren gegen den Rand (19) des Werkstücks (2) aus einer Losstellung in eine Spannstellung verlagerbar ist,
**dadurch gekennzeichnet, dass**
in der Spannstellung das Spannelement (14) an dem Werkstück (2) in mehreren Kontaktbereichen zur Anlage kommen kann, so dass das Spannelement (14) das Werkstück (2) gegen Verlagern auf der Arbeitsfläche (3) in quer zueinander stehenden Richtungen in einer Bearbeitungsstellung sichern kann, und wobei das Spannelement (14) um eine Schwenkachse (15) schwenkbar gelagert ist und beim Spannen des Werkstücks (2) auf der Arbeitsfläche (3) der Rand (19) des Werkstücks (2) zunächst in dem proximalen Abschnitt (17) des Spannelements (14) hieran zur Anlage kommen kann und beim weiteren Fahren des Spannelements (14) gegen den Rand (19) des Werkstücks (2) in die Spannstellung schwenken kann, in welcher, ergänzend zur Anlage des proximalen Abschnitts (17), der distale Abschnitt (18) des Spannelements (14) an dem Werkstück (2) zur Anlage kommen kann.

12. Bearbeitungsvorrichtung (1) nach Anspruch 11, **dadurch gekennzeichnet, dass** die Schwenkachse (15) an einer Gabelaufnahme (13) gebildet ist, in welcher das Spannelement (14) angeordnet ist.

13. Bearbeitungsvorrichtung nach eine der Ansprüche 11 oder 12 , **dadurch gekennzeichnet, dass** die Lagereinrichtung (7) mit der hieran angeordneten zumindest einer Spanneinrichtung (8, 9) sowie die Verlagerungseinrichtung lösbar auf der Arbeitsfläche (3) montiert sind.

## Claims

1. A method for clamping and machining a control cabinet component in a machining device (1), the method comprising the steps of:
- arranging a workpiece (2) embodied as a control cabinet component on a work surface (3) of a machining device (1),
- clamping the workpiece (2) on the work surface (3), wherein
- a supporting unit (7), with at least one clamping device (8, 9) arranged on it, is shifted to an edge (19) of the workpiece (2), and
- a clamping element (14) of the at least one clamping device (8, 9) is shifted from a released position to a clamped position when guided towards the edge (19) of the work-piece (2), and
- machining the workpiece (2) using a machining tool (4),
**characterized in that**
- the supporting unit (7) with the at least one clamping device (8, 9) is shifted to the clamped position at the edge (19) of the workpiece (2) using an actuator-driven shifting unit (12),
- in the clamped position, the clamping element (14) comes to rest at multiple contact points on the workpiece (2) so that the clamping element (14) secures the workpiece (2) in a machining position against shifting on the work surface (3) in directions transverse to each other, and
- the clamping element (14) is swivel mounted on a pivotal axis (15) and, when the work-piece (2) is clamped to the work surface (3), a proximal and a distal section (17, 18) of the clamping element (14), which are formed on opposite sides of a segment cutout (16) of the clamping element (14), come to rest on the workpiece (2) in such a way that
- the edge (19) of the workpiece (2) initially comes to rest in the clamping element's (14) proximal section (17) and
- the clamping element (14) swivels into the clamped position when the clamping element (14) is further guided against the edge (19) of the workpiece (2), in which clamped position the clamping element's (14) distal section (18) comes to rest on the workpiece (2), in addition to the proximal section (17).

2. The method according to claim 1, **characterized in that** the clamping element (14) presses the workpiece (2) against the work surface (3) in the clamped position.

3. The method according to any of the preceding claims, **characterized in that** the supporting unit (7) with the at least one clamping device (8, 9) is shifted vertically using the shifting unit.

4. The method according to any of the preceding claims, **characterized in that** multiple clamping devices (8, 9) are arranged on the supporting unit (7), in which, the clamping element (14) is shifted from the released position to the clamped position when the workpiece (2) is being clamped.

5. The method according to any of the preceding claims, **characterized in that** the clamping element (14) independently moves itself back to the released position when the at least one clamping device (8, 9) is removed from the workpiece (2) to release it.

6. The method according to any of the preceding claims, **characterized in that** contact areas between the workpiece's (2) neighboring edges are formed in the clamped position.

7. The method according to any of the preceding claims, **characterized in that** a mounting position of the at least one clamping device (8, 9) on the supporting unit (7) is adjustable.

8. The method according to any of the preceding claims, **characterized in that** the workpiece (2) is arranged and clamped on an upright work surface (3).

9. The method according to any of the preceding claims, **characterized in that** shifting the supporting unit (7) with the at least one clamping device (8, 9) using the shifting unit between shifting positions which are arranged out of an users's reach, at a height of at least 200 cm above the machining device's (1) standing surface.

10. The method according to any of the preceding claims, **characterized in that** the shifting unit is operated using a pneumatic actuator.

11. A machining device (1) for clamping and machining a control cabinet component comprising
- a work surface (3) which is configured for receiving a workpiece (2) which is embodied as a control cabinet component for machining,
- at least one supporting unit (7) and a clamping device (8, 9) which is arranged at the supporting unit (7), and
- a clamping element (14) of the clamping device (8, 9) which is formed with a proximal and a distal section (17, 18), arranged on opposite sides of a segment cutout (16) of the clamping device (14), and wherein the clamping element (14 is shiftable from a released position to a clamped position when guided towards the edge (19) of the workpiece (2), **characterized in that**
in the clamped position, the clamping element (14) can come to rest at multiple contact points on the workpiece (2) so that the clamping element (14) is able to secure the work-piece (2) in a machining position against shifting on the work surface (3) in directions transverse to each other, and
wherein the clamping element (14) is swivel mounted on a pivotal axis (15) and, when the work-piece (2) is clamped to the work surface (3), the edge (19) of the workpiece (2) initially can come to rest in the clamping element's (14) proximal section (17) and the clamping element (14) can swivel into the clamped position when the clamping element (14) is further guided against the edge (19) of the workpiece (2), in which clamped position the clamping element's (14) distal section (18) can come to rest on the workpiece (2), in addition to the proximal section (17).

12. The machining device (1) according to claim 11, **characterized in that** the pivotal axis (15) is formed on a fork mount (13) in which the clamping element (14) is arranged.

13. The machining device according to any of claims 11 or 12, **characterized in that** the supporting unit (7) with the at least one clamping device (8, 9) arranged thereon as well as the shifting unit are detachably mounted onto the work surface (3).

## Revendications

1. Procédé de serrage et d'usinage d'un composant d'armoire de commande dans un dispositif d'usinage (1), ce procédé comprenant les étapes suivantes :
- disposition d'une pièce (2) réalisée comme un composant d'armoire de commande sur une surface de travail (3) d'un dispositif d'usinage (1),
- serrage de la pièce (2) sur la surface de travail (3),
- un dispositif de palier (7), sur lequel est disposé un dispositif de serrage (8, 9), étant déplacé vers un bord (19) de la pièce (2) et
- un élément de serrage (14) de l'au moins un dispositif de serrage (8, 9) étant déplacé, lors d'un déplacement contre le bord (19) de la pièce (2), d'une position libre vers une position de serrage et
- usinage de la pièce (2) au moyen d'un outil d'usinage (4),
**caractérisé en ce que**
- le dispositif de palier (7) est déplacé, avec l'au moins un dispositif de serrage (8, 9), au moyen d'un dispositif de déplacement (12) actionné avec un actionneur, vers le bord (19) de la pièce (2) dans la position de serrage,
- dans la position de serrage, l'élément de serrage (14) vient en appui contre la pièce (2) dans plusieurs zones de contact, de façon à ce que l'élément de serrage (14) sécurise la pièce (2) contre un déplacement sur la surface de travail (3) dans des directions transversales entre elles dans une position d'usinage et
- l'élément de serrage (14) est déplacé de manière pivotante autour d'un axe de pivotement (15) et, lors du serrage de la pièce (2) sur la surface de travail (3), une portion proximale et une portion distale (17, 18) de l'élément de serrage (14), qui sont formées sur des côtés opposés d'une découpe de segment (16) de l'élément de serrage (14), viennent en appui contre la pièce (2), de façon à ce que
- le bord (19) de la pièce (2) vienne d'abord en appui contre l'élément de serrage (14) dans la portion proximale (17) de celui-ci et
- l'élément de serrage (14) pivote, lors d'un déplacement supplémentaire de l'élément de serrage (14) contre le bord (19) de la pièce (2), vers la position de serrage, dans laquelle, en complément de l'appui de la portion proximale (17), la portion distale (18) de l'élément de serrage (14) vient en appui contre la pièce (2).

2. Procédé selon la revendication 1, **caractérisé en ce que** l'élément de serrage (14) comprime la pièce (2) dans la position de serrage contre la surface de travail (3).

3. Procédé selon l'une des revendications précédentes, **caractérisé en ce que** le dispositif de palier (7) est déplacé, avec l'au moins un dispositif de serrage (8, 9), au moyen du dispositif de déplacement, dans la direction verticale.

4. Procédé selon l'une des revendications précédentes, **caractérisé en ce que**, sur le dispositif de palier (7), sont disposés plusieurs dispositifs de serrage (8, 9) pour chacun desquels, lors du serrage de la pièce (2), l'élément de serrage (14) est déplacé de la position libre vers la position de serrage.

5. Procédé selon l'une des revendications précédentes, **caractérisé en ce que** l'élément de serrage (14) retourne automatiquement vers la position libre lorsque l'au moins un dispositif de serrage (8, 9) est éloigné de celui-ci pour la libération de la pièce (2).

6. Procédé selon l'une des revendications précédentes, **caractérisé en ce que**, dans la position de serrage, les zones de contact sont réalisées sur des surfaces d'arêtes adjacentes de la pièce (2).

7. Procédé selon l'une des revendications précédentes, **caractérisé en ce qu'**une position de montage de l'au moins un dispositif de serrage (8, 9) peut être réglée sur le dispositif de palier (7).

8. Procédé selon l'une des revendications précédentes, **caractérisé en ce que** la pièce (2) est disposée sur une surface de travail (3) verticale et serrée.

9. Procédé selon l'une des revendications précédentes, **caractérisé en ce que** le déplacement du dispositif de palier (7) avec l'au moins un dispositif de serrage (8, 9) au moyen du dispositif de déplacement est effectué entre des positions de déplacement qui sont disposées, par rapport à une surface de support du dispositif d'usinage (1), au-dessus d'une hauteur de poignée d'utilisateur d'au moins 200 cm.

10. Procédé selon l'une des revendications précédentes, **caractérisé en ce que** le dispositif de déplacement est actionné au moyen d'un actionneur pneumatique.

11. Dispositif d'usinage (1) pour le serrage et l'usinage d'un composant d'armoire de commande, avec
- une surface de travail (3) qui est conçue pour loger une pièce (2) réalisée comme un composant d'armoire de commande, pour son usinage,
- au moins un dispositif de palier (7) et un dispositif de serrage (8, 9), qui est disposé sur le dispositif de palier (7) et
- un élément de serrage (14) du dispositif de serrage (8, 9), qui est constitué de portions proximale et distale (17, 18), qui sont disposées sur des côtés opposés d'une découpe de segment (16) de l'élément de serrage (14) et l'élément de serrage (14) pouvant être déplacé, lors d'un déplacement contre le bord (19) de la pièce (2), d'une position libre vers une position de serrage,
**caractérisé en ce que**
dans la position de serrage, l'élément de serrage (14) vient en appui contre la pièce (2) dans plusieurs zones de contact, de façon à ce que l'élément de serrage (14) puisse sécuriser la pièce (2) contre un déplacement sur la surface de travail (3) dans des directions transversales entre elles dans une position d'usinage et
l'élément de serrage (14) étant logé de manière pivotante autour d'un axe de pivotement (15) et, lors du serrage de la pièce (2) sur la surface de travail (3), le bord (19) de la pièce (2) venant d'abord en appui dans la portion proximale (17) de l'élément de serrage (14) contre celui-ci et pouvant pivoter, lors d'un déplacement supplémentaire de l'élément de serrage (14) contre le bord (19) de la pièce (2) vers la position de serrage, dans laquelle, en complément de la portion proximale (17), la portion distale (18) de l'élément de serrage (14) vient en appui contre la pièce (2).

12. Dispositif d'usinage (1) selon la revendication 11, **caractérisé en ce que** l'axe de pivotement (15) est formé au niveau d'un logement en fourche (13), dans lequel l'élément de serrage (14) est disposé.

13. Dispositif d'usinage (1) selon l'une des revendications 11 ou 12, **caractérisé en ce que** le dispositif de palier (7) avec l'au moins un dispositif de serrage (8, 9) disposé sur celui-ci, ainsi que le dispositif de déplacement sont montés de manière amovible sur la surface de travail (3).
